**Europäisches Patentamt**

**European Patent Office**

**Office européen des brevets**

(19)

(11) Veröffentlichungsnummer: **0 286 048 B1**

(12)

# EUROPÄISCHE PATENTSCHRIFT

(45) Veröffentlichungstag der Patentschrift: **22.01.92**

(51) Int. Cl.⁵: **C08J 3/02**, C08L 61/06, C09D 161/04, C09J 161/04

(21) Anmeldenummer: **88105384.7**

(22) Anmeldetag: **05.04.88**

(54) **Verfahren zur Herstellung von wässerigen Phenolharzemulsionen.**

(30) Priorität: **06.04.87 AT 838/87**

(43) Veröffentlichungstag der Anmeldung:
**12.10.88 Patentblatt 88/41**

(45) Bekanntmachung des Hinweises auf die Patenterteilung:
**22.01.92 Patentblatt 92/04**

(84) Benannte Vertragsstaaten:
**BE CH DE ES FR GB IT LI NL SE**

(56) Entgegenhaltungen:
**EP-A- 0 154 835**
**GB-A- 2 159 521**
**US-A- 4 208 528**

(73) Patentinhaber: **Vianova Kunstharz Aktiengesellschaft**

**A-8402 Werndorf(AT)**

(72) Erfinder: **Urbano, Edmund, Dr.**
**Grazer Strasse 44**
**A-8045 Graz(AT)**

EP 0 286 048 B1

**Beschreibung**

Die Erfindung betrifft ein Verfahren zur Herstellung von wäßrigen Emulsionen von Phenolharzen und phenolmodifizierten Hartharzen, wie sie in der Klebstoffindustrie zur Kombination mit verschiedenen Latex-Typen und in der Lackindustrie als Bindemittel und Zusatzstoffe in großem Umfang eingesetzt werden.

Üblicherweise werden diese Phenolharze in Form ihrer Lösungen in organischen Lösemitteln oder in Form wäßriger Dispersionen oder als Suspensionen der feinvermahlenen Produkte im wäßrigen Medium verarbeitet.

Die Lösungen im organischen Lösemittel verursachen beim Verbraucher eine außerordentliche Belastung der Umwelt und sollten daher so weit wie möglich durch wäßrige Lieferformen ersetzt werden. Diese wäßrigen Lieferformen in Form von Dispersionen bzw. Suspensionen zeigen jedoch in vielen Fällen eine mangelnde Verträglichkeit mit den eingesetzten Acryl-, Polyurethan- oder Polychloropren-Latices. Damit ist im Klebstoff-Film keine optimale homogene Verteilung der Phenolharzteilchen zu erreichen, wodurch eine Verminderung der Klebkraft bewirkt wird. Öl/Wasser-Dispersionen, die mit Hilfe der üblichen Emulgatoren stabilisiert sind, zeigen aufgrund der emulsionsbrechenden Wirkung des in diesen Harzen immer vorhandenen freien Phenols sowie wegen der starken Wasserstoffbrückenbildung nur eine mangelhafte Lagerstabilität. Diese Nachteile zeigen sich naturgemäß in noch stärkerem Ausmaß bei Suspensionen der feinvermahlenen Hartharze. Aufgrund dieser Nachteile scheinen wäßrige Zubereitungen dieser Art am Markt gar nicht oder nur als Versuchsprodukte auf (s. z. B. KARSTEN, LACK-ROHSTOFFTABELLEN, 7. Auflage, 1981, Curt R. Vincentz Verlag).

In der GB-A-2 159 521 wird ein technologisch aufwendiges Verfahren zur Herstellung von Suspensionen von Harzen, die über polare Gruppen, wie Carboxyl- oder Aminogruppen, verfügen und einen Erweichungspunkt über 65° C aufweisen, beschrieben, wobei ein nichtionisches Netzmittel verwendet wird und die polaren Gruppen vor der Wasserzugabe neutralisiert werden. Zur besseren Verteilung der Netzmittel werden die Harze in hydrophilen und unbegrenzt wassermischbaren Lösemitteln gelöst. Eine Verwendung von olephilen Lösungsmitteln wird für dieses Verfahren ausgeschlossen, da dies zu einem Verschmelzen der Teilchen führt und die Suspension dadurch zerstört wird. Phenolharze lassen sich nach dieser Art nicht emulgieren.

Es wurde nun überraschenderweise gefunden, daß man in einfacher Weise sehr stabile Öl/Wasser-Emulsionen von Phenolharzen oder phenolmodifizierten Harzen mit einem Erweichungspunkt von 40 bis 140° C herstellen kann, wenn man in einer besonderen Verfahrensweise als Hilfslösemittel nicht- wassermischbare Lösemittel und Emulgatoren vom anionischen Typ, die gegebenenfalls nachträglich teilweise oder vollständig neutralisiert werden, einsetzt.

Die Erfindung betrifft demgemäß ein Verfahren zur Herstellung von Öl/Wasser-Emulsionen von Phenolharzen, modifizierten Phenolharzen oder phenolmodifizierten Harzen, deren Erweichungspunkt zwischen 40 und 140° C liegt, in Gegenwart von Hilfslösemitteln und Emulgatoren, welches dadurch gekennzeichnet ist, daß man das Harz in Gegenwart von 5 bis 30 Gew.-%, vorzugsweise weniger als 10 Gew.-%, bezogen auf das Harz (Feststoff), eines im wesentlichen nicht wassermischbaren Lösemittels durch Erwärmen über den Schmelzpunkt aufschmilzt und die rührbare Masse mit 3 bis 30 Gew.-% , vorzugsweise 5 bis 20 Gew.-%, bezogen auf das Harz (Feststoff), eines anionischen Emulgators, gegebenenfalls in Gegenwart von bis zu 3 Gew.-% eines nichtionischen Emulgators, homogen vermischt, gegebenenfalls die Säuregruppen des Emulgators mit einer Base neutralisiert und den Ansatz bei der Aufschmelztemperatur mit Wasser bis zur Phasenumkehr der zuerst gebildeten Wasser/Öl-Emulsion in die Öl/Wasser-Emulsion versetzt und nach guter Homogenisierung bei fallender Temperatur die weitere Verdünnung mit Wasser bis zum gewünschten Feststoffgehalt durchführt.

Die Erfindung betrifft weiters die Verwendung der erfindungsgemäß hergestellten Emulsionen für die Herstellung von Kleb- und Dichtstoffen sowie als Lackbindemittel oder als Härter und Zusatzstoffe für wäßrige Lacksysteme für die Trocknungs- oder Verlaufsregulierung in Wasser-Lacken.

Der besondere Vorteil des erfindungsgemäßen Verfahrens liegt in der problemlosen Möglichkeit der Verarbeitung verschiedenster Materialien in den in der Kunstharzindustrie üblichen Anlagen. Die Inversion der bei der Wasserzugabe anfänglich auftretenden Wasser/Öl-Emulsion in die gewünschte Öl/Wasser-Emulsion erfolgt bereits bei der Mischtemperatur, wodurch bereits nach kurzer Homogenisierung die Emulsion verdünnt werden kann, ohne daß sich die Teilchengröße des emulgierten Harzes beim weiteren Abkühlen verändert.

Die Teilchengröße liegt im Bereich von unter 1 $\mu$m, sodaß auch bei Filmstärken von ca. 300 $\mu$m transparente Filme erhalten werden. Die erfindungsgemäß hergestellten Emulsionen zeigen eine ausgezeichnete Stabilität auch bei erhöhter Temperatur und eine hervorragende Mischbarkeit mit verträglichen Latices oder selbstemulgierbaren Harzen. Vorzugsweise werden die Emulsionen mit einem Feststoffgehalt von 40 bis 60 Gew.-% hergestellt.

Zu den für das erfindungsgemäße Verfahren eingesetzten Phenolharzen zählen neben nichtplastifizierten Phenolharzen, Novolakharzen, ölreaktiven Alkylphenolharzen oder veretherten Resolharzen auch die mit ungesättigten Terpenkohlenwasserstoffen modifizierten Phenolterpenharze, sowie Phenol-Kolofoniumharze und andere phenolmodifizierte Hartharze. Diese Harze haben einen Erweichungspunkt zwischen 40 und 140°C und weisen einen Phenolharzanteil zwischen 10 und 100 % auf. Der Aufbau und die detaillierte Zusammensetzung dieser Phenolharze gehören seit langem zum Stand der Technik und finden sich in der einschlägigen Fachliteratur.

Für die Herstellung der Harzemulsion werden die Harze in 5 bis 30 Gew.-% (bezogen auf das Harz) eines im wesentlichen nicht wassermischbaren Lösemittels durch Erwärmen über dem Schmelzpunkt aufgeschmolzen. Vorzugsweise werden, bezogen auf Emulsion, weniger als 10 Gew.-% Lösemittel eingesetzt; die lösemittelhaltige Harzschmelze soll sich jedoch in einem gut rührbaren Zustand befinden. Als nicht wassermischbar werden dabei Lösemittel bezeichnet, die bei Raumtemperatur max. bis zu 20 Gew.-% in Wasser löslich sind bzw. ihrerseits max. 30 Gew.-% Wasser aufnehmen können. Dazu gehören Alkohole mit 4 und mehr Kohlenstoffatomen, höhere Glykolether, Carbonsäureester, Benzinkohlenwasserstoffe und aromatische Kohlenwasserstoffe. Als bevorzugte Lösemittel werden aromatenreiche Kohlenwasserstofflösemittel mit einem Siedebereich von 160-180°C eingesetzt.

In die lösemittelhaltige Harzschmelze wird dann der anionische Emulgator, sowie gegebenenfalls der Anteil an nichtionischem Emulgator gründlich eingerührt. Die anionischen Emulgatoren werden dabei in Form der freien Säuren oder bevorzugt in Form ihrer Salze eingesetzt. Es ist auch möglich, Mischungen mehrerer anionischer Emulgatoren zu verwenden. Die Menge des anionischen Emulgators beträgt 3 bis 30 Gew.-% (bezogen auf das Harzgewicht), vorzugsweise werden 5 bis 20 Gew.-% des anionischen Emulgators eingesetzt. Gegebenenfalls können auch bis zu 3 Gew.-% und, bezogen auf die Emulgatormischung, max. 20 Gew.-% eines nichtionischen Emulgators mitverwendet werden.

Als anionische Emulgatoren werden vor allem Phosphorsäuremono- oder diester von $C_6$- bis $C_{22}$-Fettalkohol- oder Alkylphenolpolyglykolethern oder $C_6$- bis $C_{22}$-Fettalkohol- bzw. Alkylphenolpolyglykolethercarbonsäuren und/oder die Salze dieser Verbindungen eingesetzt. In der Polyglykolkette können die Produkte Ethylenglykoleinheiten, die auch ganz oder teilweise durch Propylenglykoleinheiten ersetzt sind, aufweisen.

Beispiele solcher anionischer Emulgatoren sind Octyl-oder Nonyl- oder Di-tert-Butyl-phenol-(poly-1-oxa-ethen-)-oxy-ethyl-phosphat, Lauryl-, Stearyl-, Palmityl-, Isotridecyl- oder Octylphenol-(poly-1-oxa-propen)-oxa-ethen-carbonsäure und andere Polyglykolethercarbonsäuren und deren Salze.

Überraschenderweise hat es sich gezeigt, daß die häufig verwendeten anionischen Emulgatoren vom Typ der Alkyl-bzw. Alkylphenol-polyglykolethersulfate als alleinige Emulgatoren in fast allen Fällen ungeeignet sind. Die Mitverwendung von max. 20 % (bez. auf Gesamtemulgatormenge) ist jedoch möglich.

Als nichtionische Emulgatoren sind Alkylpolyglykolether, wie Lauryl-, Isotridecyl-, Octylphenol-oder Nonylphenolethoxylate mit mehr als einer Ethylenoxideinheit, sowie Ethylenoxid-Propylenoxidblockpolymere und ähnliche hydrolysestabile Verbindungen mit ausgeprägten Tensideigenschaften geeignet.

Diese Zusatzemulgatoren haben keinen wesentlichen Einfluß auf die Emulsionsstabilität, sondern erleichtern in vielen Fällen die Prozeßführung, da sie die Verteilung der anionischen Emulgatoren im Harz begünstigen und daher kürzere Mischzeiten ermöglichen.

Zur Neutralisation der anionischen Emulgatoren können Alkalihydroxide, Ammoniak, primäre, sekundäre oder tertiäre Amine bzw. Alkanolamine oder heterocyclische N-Verbindungen wie Piperidin, Pyridin oder deren Derivate eingesetzt werden. Bevorzugt werden Alkanolamine, wie Dimethylethanolamin, Diethylethanolamin, Triethanolamin oder Aminopropandiol.

Nach Zugabe der Emulgatoren und deren homogenen Verteilung wird unter Aufrechterhaltung der gewählten Temperatur ein erster Anteil des Wassers zugegeben. Dieser Wasseranteil wird so gewählt, daß die resultierende Emulsion bereits als Öl/Wasser-Emulsion vorliegt, d. h. daß der Inversionspunkt deutlich überschritten wird.

Dieser Punkt liegt in allen Fällen bei einem Festkörpergehalt von mehr als 50 %, meist im Bereich zwischen 65 und 80 % Festkörperanteil und ist durch ein Viskositätsmaximum deutlich erkennbar.

Nach guter Homogenisierung erfolgt die weitere Verdünnung der Emulsion bei fallender Temperatur bis zum gewünschten Festkörpergehalt. Die erfindungsgemäß hergestellten Emulsionen können entsprechend ihrem chemischen Aufbau in verschiedenster Weise eingesetzt werden. Neben dem bevorzugten Einsatz in der Klebstoffindustrie zur Erhöhung der Klebkraft der verschiedenen Latexsorten, können sie in der Lackindustrie als Trocknungsregulatoren, Verlauf- und Vernetzungsmittel eingesetzt werden. Weitere Einsatzmöglichkeiten sind ihre Verwendung als Härterkomponente in Epoxidharzlacken oder Harnstoff-Formaldehydharzen. Besonders geeignet sind die erfindungsgemäß hergestellten Produkte als Bindemittel in wäßrigen Tauch- und Tränklacken, insbesondere in sogenannten Goldlacken für die Dosen-Innenlackierung, aber auch in Kombination mit z. B. Alkyd- oder Acrylharzen als Bindemittel in Grundierungen, Spachteln und Buntlacken.

Die folgenden Beispiele erläutern die Erfindung, ohne sie in ihrem Umfang zu beschränken. Alle Angaben in Teilen oder Prozenten beziehen sich, soferne nicht anderes angegeben ist, auf Gewichtseinheiten.

In den Beispielen werden folgende Materialien eingesetzt:

Phenolharz 101:

handelsübliches 100%iges ölreaktives Alkylphenolharz für den Einsatz in der Lack- und Klebstoffindustrie; Schmelzbereich DIN 53 181:50 bis 65°C

Phenolharz 111:

handelsübliches 100%iges phenolharzmodifiziertes Kolofoniumharz für Öl- und Alkydharzlacke; Schmelzbereich 105 - 110°C, Säurezahl 10 - 20 mg KOH/g

Phenolharz 191:

handelsübliches 100%iges Terpenphenolharz, Schmelzbereich 66 - 75°C

Phenolharz 626:

handelsübliches 100%iges kolofoniummodifiziertes Phenolharz; Schmelzbereich 125 - 130°C, Säurezahl 10-20 mg KOH/g

Solvent A :

Aromatenreiches Kohlenwasserstofflösemittel, Aromatengehalt ASTM-D-1319 : 98 Vol %; Siedebereich ASTM-D-1078/86 : 160 - 182°C; Anilinpunkt ASTM-D-1012 : 15°C

Emulgator 160 N:

Na-Salz der Lauryl-(poly-1-oxapropen-)-oxaethancarbonsäure (ca. 90 % Wirksubstanz)

Emulgator N 10:

Alkylphenol-(poly-1-oxaethen-)oxaethylphosphat (Mono- und Diestergemisch)

Emulgator N 090:

Nonylphenolethoxylat mit ca. 9 Ethylenoxideinheiten

Emulgator N 300:

Nonylphenolethoxylat mit ca. 30 Ethylenoxidheinheiten

Beispiel 1: 100 Tle Phenolharz 101 werden mit 17 Tlen Solvent A bei 80°C aufgeschmolzen und nach gründlichem Einmischen von 11 Tlen Emulgator 160 N und 3 Tlen Emulgator N 10 langsam mit 4,6 Tlen einer 50%igen wäßrigen Natriumhydroxidlösung versetzt. Unter Beibehaltung einer Temperatur von 80°C werden nach einer Mischzeit von 30 Minuten unter Rühren langsam 30 Tle Wasser zugegeben und der Ansatz wird eine weitere Stunde ohne Heizen gerührt. Zu der nun dickflüssigen Emulssion werden unter Rühren bei fallender Temperatur weitere 39,9 Tle Wasser zugefügt, wobei die Temperatur auf ca. 50°C absinkt. Die 55%ige Emulsion wird dann unter Rühren auf 40°C gekühlt.

Ein ca. 300 µm-Film auf einer Glasplatte zeigt gute Benetzung und trocknet innerhalb einer Stunde zu einem klaren und harten Film, der nach einer Lagerung von 5 Tagen bei Zimmertemperatur eine gute Wasserfestigkeit zeigt. Die Mischbarkeit der Emulsion mit Chloropren-, Acryl-, Polyurethan- und Kautschuklatices ist sehr gut; die Wasserbeständigkeit der Filme wird wesentlich verbessert.

Beispiel 2: Unter den in Beispiel 1 beschriebenen Bedingungen, jedoch ohne Zugabe einer Natriumhydroxidlösung, wird aus 100 Tlen Phenolharz 101, 17 Tlen Solvent A, 22 Tlen Emulgator 160 N und 45 bzw. 46 Tlen Wasser eine 52%ige Emulsion hergestellt, die in ihren Eigenschaften dem Produkt des Beispiels 1 ähnlich ist.

Beispiel 3 : In gleicher Weise wird eine Emulsion aus 100 Tlen Phenolharz 101, 17 Tlen Solvent A, 10 Tlen Emulgator N 10, 15,4 Tlen 5%ige Natriumhydroxidlösung und 30 bzw. 39 Tlen Wasser hergestellt. Auch diese Emulsion zeigt ein ähnliches Eigenschaftsbild wie die Emulsionen der Beispiele 1 und 2.

Vergleichsbeispiel : Wie in Beispiel 1 wird bei 80°C eine Schmelze aus 100 Tlen Phenolharz 101 und 17 Tlen Solvent A hergestellt, die mit 6 Tlen Emulgator N 090 und 14 Tlen Emulgator N 300 versetzt und 30 Minuten bei 80°C gemischt wird. Bei der Zugabe der ersten Wassermenge (45 Tle) entsteht eine Wasser/Öl-Emulsion, die schlecht benetzt und beim Zugeben der zweiten Wassermenge (49 Tle) in eine hochviskose, zähe Masse übergeht.

Wird die zweite Wassermenge nicht unter Abkühlen, sondern auch bei 80 bis 95°C unter hoher Scherkraft eingerührt, erhält man beim Abkühlen eine Suspension des Phenolharzes in Wasser, die bald zerfällt und mit den Latices keine homogene Mischung zeigt.

Beispiel 4 : 100 Tle Phenolharz 111 werden in 20 Tlen Solvent A aufgeschmolzen und bei 110°C mit 20 Tlen Emulgator 160 N vermischt. Nach Zugabe von 60 Tlen Wasser wird die Temperatur auf 90°C gesenkt und der Ansatz eine Stunde kräftig gerührt. Nach Zugabe von weiteren 60 Tlen Wasser wird die Temperatur rasch auf 40°C gesenkt. Die erhaltene Emulsion hat einen pH-Wert von ca. 7,0 und ist einwandfrei kombinierbar.

Beispiel 5 : 100 Tle Phenolharz 191 werden in 15 Tlen Solvent A aufgeschmolzen und bei 80°C mit 15 Tlen Emulgator 160 N vermischt. Bei der Zugabe von 120 Tlen Wasser bei 80°C entsteht eine hochviskose Emulsion, die mit weiteren 100 Tlen Wasser zu einer mit Latices gut kombinierbaren Emulsion verdünnt wird.

Beispiel 6: 100 Tle Phenolharz 626 werden mit 30 Tlen Solvent A bei 100°C aufgeschmolzen und mit 20 Tlen Emulgator N 10, 31 Tlen der 5%igen Natriumhydroxidlösung und zweimal 75 Tlen Wasser entsprechend Beispiel 1 verarbeitet. Es resultiert eine opake, mit den Latices mischbare Emulsion.

**Patentansprüche**

1. Verfahren zur Herstellung von Öl/Wasser-Emulsionen von Phenolharzen, modifizierten Phenolharzen oder phenolmodifizierten Harzen, deren Erweichungspunkt zwischen 40 und 140°C liegt, in Gegenwart von Hilfslösemitteln und Emulgatoren, dadurch gekennzeichnet, daß man das Harz in Gegenwart von 5 bis 30 Gew.-% , vorzugsweise weniger als 10 Gew.-%, bezogen auf das Harz (Feststoff), eines im wesentlichen nicht wassermischbaren Lösemittels durch Erwärmen über den Schmelzpunkt aufschmilzt und die rührbare Masse mit 3 bis 30 Gew.-% , vorzugsweise 5 bis 20 Gew.-%, bezogen auf das Harz (Feststoff), eines anioni-schen Emulgators, gegebenenfalls in Gegen-wart von bis zu 3 Gew.-% eines nichtionischen Emulgators, homogen vermischt, gegebenenfalls die Säuregruppen des Emulgators mit einer Base neutralisiert und den Ansatz bei der Aufschmelztemperatur mit Wasser bis zur Phasenumkehr der zuerst gebildeten Wasser/Öl- in die Öl/Wasser-Emulsion versetzt und nach guter Homogenisierung bei fallender Temperatur die weitere Verdünnung mit Wasser bis zum gewünschten Feststoffgehalt durchführt.

2. Verfahren nach Anspruch 1, dadurch gekennzeichnet, daß man als Phenolharze nichtplastifizierte Phenolharze oder Novolakharze oder ölreaktive Alkylphenolharze oder veretherte Resolharze einsetzt.

3. Verfahren nach Anspruch 1, dadurch gekennzeichnet, daß man als modifizierte Phenolharze mit Terpenkohlenwasserstoffen modifizierte Phenolharze einsetzt.

4. Verfahren nach Anspruch 1, dadurch gekennzeichnet, daß man als phenolmodifizierte Harze Phenolkolofoniumharze einsetzt.

5. Verfahren nach den Ansprüchen 1 bis 4, dadurch gekennzeichnet, daß das im wesentlichen nicht wassermischbare Lösemittel bei Raumtemperatur maximal bis zu 20 Gew.-% in Wasser löslich ist und maximal 30 Gew.-%

Wasser aufnehmen kann.

6. Verfahren nach den Ansprüchen 1 bis 5, dadurch gekennzeichnet, daß man als Lösemittel aromatische Kohlenwasserstoffe mit einem Siedebereich von 160 bis 180°C einsetzt.

7. Verfahren nach den Ansprüchen 1 bis 6, dadurch gekennzeichnet, daß man als anionische Emulgatoren Phosphorsäuremono- und -diester von $C_6$ bis $C_{22}$-Fettalkohol- oder Al-kylphenolpolyglykolethern und/oder $C_6$ bis $C_{22}$ Fettalkohol- oder Alkylp-henolpolyglykolethercarbonsäuren und/oder die Salze dieser Verbindungen einsetzt.

8. Verwendung der nach den Ansprüchen 1 bis 7 erhaltenen Emulsionen als Zusatzkomponente für Klebstoffe und Dichtstoffe auf der Basis von Polyurethan-, Acryl- oder Kautschuklatices.

9. Verwendung der nach den Ansprüchen 1 bis 7 erhaltenen Emulsionen als Lackbindemittel oder als Härter für wäßrige Lackbindemittel.

10. Verwendung der nach den Ansprüchen 1 bis 7 erhaltenen Emulsionen als Lackhilfsmittel für die Trocknungs- oder Verlaufsregulierung in Wasserlakken.

**Claims**

1. Process for the preparation of oil-in-water emulsions of phenolic resins, modified phenolic resins or phenol-modified resins whose softening point is between 40 and 140°C, in the presence of auxiliary solvents and emulsifiers, characterised in that the resin is melted by heating to above the melting point in the presence of from 5 to 30% by weight, preferably less than 10% by weight, based on the resin (solid), of an essentially water-immiscible solvent, and the stirrable material is homogeneously mixed with from 3 to 30% by weight, preferably from 5 to 20% by weight, based on the resin (solid), of an anionic emulsifier, optionally in the presence of up to 3% by weight of a nonionic emulsifier, the acid groups of the emulsifier are, if appropriate, neutralised using a base, and the batch is treated at the melting point with water until phase inversion of the water-in-oil emulsion formed initially to give an oil-in-water emulsion, and, after good homogenisation at falling temperature, the emulsion is further diluted with water to the desired solids content.

2. Process according to Claim 1, characterised in that the phenolic resins employed are non-plasticised phenolic resins or novolak resins or oil-reactive alkylphenolic resins or etherified resol resins.

3. Process according to Claim 1, characterised in that the modified phenolic resins employed are phenolic resins which have been modified with terpene hydrocarbons.

4. Process according to Claim 1, characterised in that the phenol-modified resins employed are phenol-colophony resins.

5. Process according to Claims 1 to 4, characterised in that the essentially water-immiscible solvent has a maximum solubility in water of up to 20% by weight at room temperature and is able to dissolve a maximum of 30% by weight of water.

6. Process according to Claims 1 to 5, characterised in that the solvent employed is an aromatic hydrocarbon having a boiling range of from 160 to 180°C.

7. Process according to Claims 1 to 6, characterised in that the anionic emulsifiers employed are monoesters or diesters of phosphoric acid with polyglycol ethers of a $C_6$ to $C_{22}$-fatty alcohol or an alkylphenol and/or polyglycol ether carboxylic acids of a $C_6$ to $C_{22}$-fatty alcohol or an alkylphenol and/or salts of these compounds.

8. Use of the emulsions obtained according to Claims 1 to 7 as additional components for adhesives and sealants based on polyurethane, acrylic or rubber latices.

9. Use of the emulsions obtained according to Claims 1 to 7 as paint binders or as curing agents for aqueous paint binders.

10. Use of the emulsions obtained according to Claims 1 to 7 as paint additives for regulating the drying or flow-out in aqueous paints.

**Revendications**

1. Procédé de préparation d'émulsions huile dans l'eau de résines phénoliques, de résines phénoliques modifiées ou de résines modifiées au phénol, dont le point de ramollissement est compris entre 40 et 140°C, en présence de solvants auxiliaires et d'émulsifiants, caractérisé en ce que l'on fait fondre la résine en présence de 5 à 30% en poids, de préférence de moins de 10% en poids, par rapport à la résine (matière solide), d'un solvant sensiblement non miscible à l'eau, par chauffage au-dessus du point de fusion, et l'on mélange de manière homogène la masse mélangeable avec 3 à 30% en poids, de préférence 5 à 20% en poids, par rapport à la résine (matière solide), d'un émulsifiant anionique, éventuellement en présence de jusqu'à 3% en poids d'un émulsifiant non ionique, l'on neutralise éventuellement les groupes acides de l'émulsifiant avec une base et l'on additionne d'eau la charge à la température de fusion jusqu'à l'inversion de phases de l'émulsion eau dans l'huile formée d'abord en l'émulsion huile dans l'eau et, après une bonne homogénéisation, l'on poursuit la dilution à l'eau jusqu'à la teneur en solides souhaitée tandis que la température décroît.

2. Procédé selon la revendication 1, caractérisé en ce que l'on utilise comme résines phénoliques des résines phénoliques non plastifiées ou des résines novolaques ou des résines alkylphénoliques oléoactives ou des résines de résol éthérifiées.

3. Procédé selon la revendication 1, caractérisé en ce que l'on utilise comme résines phénoliques modifiées des résines phénoliques modifiées avec des hydrocarbures terpéniques.

4. Procédé selon la revendication 1, caractérisé en ce que l'on utilise comme résines modifiées au phénol des résines phénol-colophane.

5. Procédé selon les revendications 1 à 4, caractérisé en ce que le solvant sensiblement non miscible à l'eau est soluble dans l'eau à raison d'au plus 20% en poids à la température ambiante et peut absorber au plus 30% en poids d'eau.

6. Procédé selon les revendications 1 à 5 caractérisé en ce que l'on utilise comme solvant des hydrocarbures aromatiques ayant un domaine d'ébullition de 160° à 180°C.

7. Procédé selon les revendications 1 à 6, caractérisé en ce que l'on utilise comme émulsifiants anioniques ou bien des mono- et diesters de l'acide phosphorique avec des ethers de polyglycol et d'un alcool gras en $C_6$ à $C_{22}$ ou d'un alkylphénol ou bien des acides carboxyliques des ethers de polyglycol et d'un alcool gras en $C_6$ à $C_{22}$ ou d'un alkylphénol et/ou les sels de ces composés.

8.  Utilisation des émulsions obtenues selon les revendications 1 à 7 comme constituants additionnels pour adhésifs et produits d'étanchéité à base de latex de polyuréthanne, de latex acryliques ou de latex de caoutchouc.

9.  Utilisation des émulsions obtenues selon les revendications 1 à 7 comme liants pour vernis ou comme durcisseurs pour liants aqueux pour vernis.

10. Utilisation des émulsions obtenues selon les revendications 1 à 7 comme adjuvants pour vernis pour la régulation du séchage ou de l'écoulement des vernis à l'eau.